# EUROPEAN PATENT APPLICATION

(11) **EP 4 818 903 A1**
(43) Date of publication of application: **07.10.2026**
(21) Application number: 24911146.9
(22) Date of filing: 24.12.2024
(51) Int. Cl.: G06F 9/54

(54) **DATA TRANSMISSION METHOD, DATA PROCESSING SYSTEM, PROCESSING CHIP, AND SERVER**

(30) Priority: 27.12.2023 CN 202311830735
(71) Applicant: Huawei Technologies Co., Ltd., Shenzhen, Guangdong 518129 (CN)
(72) Inventor: CHEN, Rujie, Shenzhen, Guangdong 518129 (CN); ZHENG, Fei, Shenzhen, Guangdong 518129 (CN)
(74) Representative: Goddar, Heinz J.
(86) International application number: PCT/CN2024/142025
(87) International publication number: WO 2025/140221

(57) **Abstract**

This application discloses a data transmission method, a data processing system, a processing chip, and a server, and relates to the field of computer technologies. The method is applied to a data processing system. A plurality of processing chips are distributed on a plurality of servers in the system. Each processing chip has a plurality of communication queues, used for storing communication messages received by the processing chip. Based on this, when data transmission is performed between any two processing chips, a first processing chip writes a first communication message into a first communication queue corresponding to the first processing chip on a second processing chip, so that the second processing chip performs data transmission with the first processing chip based on the first communication message. According to this flexible communication mechanism, data transmission can be quickly implemented between any two processing chips in the system, thereby improving data transmission efficiency between different processing chips.

## Description

This application claims priority to Chinese Patent Application No. 202311830735.2, filed on December 27, 2023 and entitled "DATA TRANSMISSION METHOD, DATA PROCESSING SYSTEM, PROCESSING CHIP, AND SERVER", which is incorporated herein by reference in its entirety.

### TECHNICAL FIELD

This application relates to the field of computer technologies, and in particular, to a data transmission method, a data processing system, a processing chip, and a server.

### BACKGROUND

With rapid development of technologies such as artificial intelligence (artificial intelligence, AI) and high performance computing (high performance computing, HPC), various types of processing chips emerge, such as a graphics processing unit (graphics processing unit, GPU), a neural network processing unit (neural network processing unit, XPU), an intelligent processing unit (intelligent processing unit, IPU), a tensor processing unit (tensor processing unit, TPU), and a domain-specific architecture (domain specific architecture, DSA) chip.

Generally, different processing chips in a server are interconnected through a chip bus, and processing chips in different servers are interconnected through a network switching device. In this way, data transmission may be performed between the processing chips in the server through the chip bus, and data transmission may be performed between the processing chips in the different servers by using remote direct memory access (remote direct memory access, RDMA).

However, in the foregoing method, because data transmission manners used inside the server and outside the server are different, flexibility of data transmission between different processing chips is poor, and data transmission efficiency is low.

### SUMMARY

Embodiments of this application provide a data transmission method, a data processing system, a processing chip, and a server, to implement data transmission between any processing chips in a system, and improve data transmission efficiency between different processing chips. The technical solutions are as follows.

According to a first aspect, this application provides a data transmission method, applied to a scenario in which data is transmitted between a plurality of processing chips, for example, an AI scenario, an HPC scenario, a video encoding and decoding scenario, or a network packet processing scenario. This is not limited in this application. The processing chip may be an acceleration chip, or may be a general-purpose CPU, or may be a processing chip used for video encoding and decoding, network packet processing, or the like. A type of the processing chip is not limited in this application. For example, the data processing system in this application includes a plurality of servers, a plurality of processing chips are distributed on the plurality of servers, the processing chips are interconnected with each other, each processing chip has a plurality of communication queues, and the plurality of communication queues are configured to store communication messages received by the processing chips. Based on the data processing system, the data transmission method provided in this application includes: A first processing chip writes a first communication message into a first communication queue on a second processing chip, where the first communication message carries a chip memory address of to-be-transmitted data between the first processing chip and the second processing chip, and the first communication queue is used to store a communication message of the first processing chip; and the second processing chip performs data transmission with the first processing chip based on the first communication message.

In the foregoing manner, data transmission is quickly implemented between any two processing chips in the system, thereby improving data transmission efficiency between different processing chips. In addition, even if the processing chips are deployed on different servers, data transmission may be performed in this manner, thereby effectively improving data transmission efficiency. For example, in an AI scenario, as computing power of an AI processing chip continuously increases, models and parameters of AI applications continuously increase, and a data volume transmitted between AI processing chips becomes increasingly large. According to the solution provided in this application, fast data access between AI processing chips can be implemented, and data transmission load can be increased, so that data transmission between AI processing chips is more efficient.

In some embodiments, a communication engine is disposed on a port of each processing chip, and the communication engine is configured to operate the plurality of communication queues on the processing chip. The communication engine is deployed on the port of the processing chip to operate the plurality of communication queues. Because the communication engine is a component that is of the processing chip and that first receives an external message, operation efficiency can be improved.

In some embodiments, each processing chip further includes a shared configuration queue. For any processing chip, the shared configuration queue of the processing chip is used to store a mapping relationship between shared memory space of the processing chip and a chip memory address. In other words, a plurality of processing chips in the data processing system provide shared memory space. In this case, the processing chips in the data processing system may access the shared memory space.

In some embodiments, if the to-be-transmitted data is data to be transmitted from the first processing chip to the second processing chip, that the second processing chip performs data transmission with the first processing chip based on the first communication message includes:

The second processing chip sends a data obtaining request to the first processing chip based on the first communication message; and
the first processing chip determines, based on the data obtaining request and a shared configuration queue on the first processing chip, shared memory space corresponding to the to-be-transmitted data, and transmits the to-be-transmitted data to the second processing chip based on the shared memory space corresponding to the to-be-transmitted data.

In some embodiments, if the to-be-transmitted data refers to data to be transmitted from the second processing chip to the first processing chip, that the second processing chip performs data transmission with the first processing chip based on the first communication message includes:

The second processing chip determines, based on the first communication message and a shared configuration queue on the second processing chip, shared memory space corresponding to the to-be-transmitted data, and transmits the to-be-transmitted data to the first processing chip based on the shared memory space corresponding to the to-be-transmitted data.

In the foregoing manner, implementation manners of implementing data transmission based on a shared configuration queue are separately described for several different cases of the to-be-transmitted data. In this way, when the plurality of processing chips in the data processing system provide the shared memory space, a flexible communication mechanism described above can also be configured, thereby implementing efficient data transmission between any two processing chips.

In some embodiments, that the first processing chip writes a first communication message into a first communication queue on the second processing chip includes: The first processing chip writes the first communication message into the first communication queue associated with a first chip identifier, where the first chip identifier is used to identify the first processing chip.

In some embodiments, the first processing chip writes a status message into the first communication queue, where the status message indicates a chip status of the first processing chip. For example, the first processing chip writes the status message into the head of the first communication queue. The chip status refers to an operating status of the processing chip. For example, the operating status is available or unavailable (for example, the processing chip cannot operate normally due to an exception, restart, or power-off). In this manner, another processing chip can learn the chip status of the first processing chip in time.

In some embodiments, the first processing chip and the second processing chip are deployed in a same server, or the first processing chip and the second processing chip are respectively deployed in different servers. In this way, flexible communication between heterogeneous systems can be implemented.

In some embodiments, the first processing chip and the second processing chip are interconnected through a switching chip, the switching chip has routing information, and the routing information indicates a data transmission path between the first processing chip and the second processing chip.

In some embodiments, the first processing chip and the second processing chip are interconnected through a chip bus, and that the second processing chip performs data transmission with the first processing chip based on the first communication message includes: The second processing chip sends an address access request to the first processing chip based on the first communication message through the chip bus, where the address access request indicates that data transmission is performed with the first processing chip. The chip bus is, for example, an NvLink, a CXL, a UCIe, an HCCS, or a CCIX. Because the chip bus can directly transmit a memory access request sent by an acceleration unit in an acceleration chip or a CPU core in a general-purpose CPU, a memory access request passing through a bus does not need to be converted into a request in another format or encapsulated into a request in another format. Therefore, in this manner, data transmission efficiency between different processing chips can be effectively improved.

In some embodiments, the method further includes: reading, by the second processing chip, the first communication message by using an interrupt mechanism and/or a polling mechanism. In other words, the communication mechanism provided in this application supports a plurality of message reading manners, and can be flexibly used according to an actual requirement.

According to a second aspect, an embodiment of this application provides a data transmission system. The data processing system includes a plurality of servers, a plurality of processing chips are distributed on the plurality of servers, the processing chips are interconnected, each processing chip has a plurality of communication queues, and the plurality of communication queues are used to store communication messages received by the processing chips;
a first processing chip is configured to write a first communication message into a first communication queue on a second processing chip, where the first communication message carries a chip memory address of to-be-transmitted data between the first processing chip and the second processing chip, and the first communication queue is used to store a communication message of the first processing chip; and
the second processing chip is configured to perform data transmission with the first processing chip based on the first communication message.

In some embodiments, a communication engine is disposed on a port of each processing chip, and the communication engine is configured to operate the plurality of communication queues on the processing chip.

In some embodiments, each processing chip further includes a shared configuration queue, and the shared configuration queue is used to store a mapping relationship between shared memory space of the processing chip and a chip memory address of the processing chip.

In some embodiments, the first processing chip and the second processing chip are deployed in a same server, or the first processing chip and the second processing chip are respectively deployed in different servers.

In some embodiments, the first processing chip and the second processing chip are interconnected through a switching chip, the switching chip is configured with routing information, and the routing information indicates a data transmission path between the first processing chip and the second processing chip.

In some embodiments, the first processing chip and the second processing chip are interconnected through a chip bus; and
the second processing chip is configured to send an address access request to the first processing chip based on the first communication message through the chip bus, where the address access request indicates that data transmission is performed with the first processing chip.

According to a third aspect, an embodiment of this application provides a processing chip, where the processing chip includes a port, the port is configured to interconnect with another processing chip outside the processing chip, and the processing chip is configured to implement a function of the processing chip in the data transmission method provided in any one of the first aspect or the optional implementations of the first aspect.

According to a fourth aspect, an embodiment of this application provides a server, where the server includes at least one processing chip, and the processing chip is configured to implement a function of the processing chip in the data transmission method provided in any one of the first aspect or the optional implementations of the first aspect.

According to a fifth aspect, an embodiment of this application provides a computer-readable storage medium. The computer-readable storage medium is configured to store at least one segment of program code, and the at least one segment of program code is used to implement the data transmission method provided in any one of the first aspect or the optional implementations of the first aspect. The storage medium includes but is not limited to a volatile memory, for example, a random access memory, and a non-volatile memory, for example, a flash memory, a hard disk drive (hard disk drive, HDD), and a solid-state drive (solid-state drive, SSD).

According to a sixth aspect, an embodiment of this application provides a computer program product. When the computer program product runs on a processing chip, the processing chip is enabled to implement a function of the processing chip in the data transmission method provided in any one of the first aspect or the optional implementations of the first aspect. The computer program product may be a software installation package. When a function of the foregoing processing chip needs to be implemented, the computer program product may be downloaded and executed on the processing chip.

### BRIEF DESCRIPTION OF DRAWINGS

FIG. 1 is a diagram of an implementation environment according to an embodiment of this application;
FIG. 2 is a diagram of another implementation environment according to an embodiment of this application;
FIG. 3 is a diagram of a structure of a processing chip according to an embodiment of this application;
FIG. 4 is a diagram of a structure of another processing chip according to an embodiment of this application;
FIG. 5 is a diagram of a data processing system according to an embodiment of this application;
FIG. 6 is a diagram of a structure of a communication engine according to an embodiment of this application;
FIG. 7A and FIG. 7B are a diagram of a data processing system according to an embodiment of this application;
FIG. 8 is a diagram of a routing information configuration process according to an embodiment of this application;
FIG. 9 is a diagram of a switching chip according to an embodiment of this application;
FIG. 10 is a diagram of a data transmission method according to an embodiment of this application;
FIG. 11 is a diagram of a communication queue according to an embodiment of this application;
FIG. 12 is a diagram of a shared configuration queue according to an embodiment of this application;
FIG. 13 is a diagram of writing a status message into a communication queue according to an embodiment of this application;
FIG. 14 is a schematic flowchart of a data transmission method according to an embodiment of this application; and
FIG. 15 is a schematic flowchart of another data transmission method according to an embodiment of this application.

### DESCRIPTION OF EMBODIMENTS

To make the objectives, technical solutions, and advantages of this application clearer, the following further describes the implementations of this application in detail with reference to the accompanying drawings. It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, a communication message, location information of a processing chip, and the like in this application are all obtained with full authorization.

**For ease of understanding, the following first describes key terms and key concepts in this application.**

An acceleration chip, also referred to as an acceleration device or an acceleration card, is a type of dedicated hardware accelerator or computer system designed to accelerate computing processes in AI and HPC scenarios. For example, the acceleration chip is, for example, a graphics processing unit (graphics processing unit, GPU), a neural network processing unit (neural network processing unit, XPU), an intelligent processing unit (intelligent processing unit, IPU), a tensor processing unit (tensor processing unit, TPU), or a domain-specific architecture (domain specific architecture, DSA) chip. This application is not limited thereto.

A chip bus, or referred to as a chip interconnect bus, is a bus that can directly transmit a memory access request sent by an acceleration unit in the acceleration chip or a CPU core in a general-purpose processor (central processing unit, CPU). The memory access request passing through the bus does not need to undergo request format conversion or be encapsulated into a request in another format. In some embodiments, a bus that is sent by a CPU in a computer system and that is used to access an acceleration chip in the system is referred to as a CPU bus (CPU bus). In this embodiment of this application, the chip bus is, for example, an NVIDIA link (NvLink), a compute express link (compute express link, CXL), a universal chiplet interconnect express (universal chiplet interconnect express, UCIe), a Huawei cache coherent system (Huawei cache coherent system, HCCS), or a cache coherent interconnect for accelerators (cache coherent interconnect for accelerators, CCIX). This application is not limited thereto.

Unified addressing refers to a process of addressing address space of an internal memory and an external memory in a computer system in a unified manner, so that the internal memory and the external memory can use a same address addressing manner. For example, all memories in a computer system, including a main memory, a cache, an external memory, and the like, are considered as a continuous address space, and each storage unit may be addressed and accessed by using a unique address. In some embodiments, a computer system that uses unified addressing is referred to as a unified addressing system for short.

**The following describes an application scenario and an implementation environment of this application.**

This application is applied to a scenario in which data is transmitted between a plurality of processing chips, for example, an AI scenario, an HPC scenario, a video encoding and decoding scenario, or a network packet processing scenario. This is not limited in this application. The processing chip may be an acceleration chip, or may be a general-purpose CPU, or may be a processing chip used for video encoding and decoding, network packet processing, or the like. A type of the processing chip is not limited in this application. For example, this application provides a data processing system and a data transmission method, to implement point-to-point communication between any processing chips, and effectively improve data transmission efficiency between different processing chips. For example, in an AI scenario, as computing power of an AI processing chip continuously increases, models and parameters of AI applications continuously increase, and a data volume transmitted between AI processing chips becomes increasingly large. According to the solution provided in this application, fast data access between AI processing chips can be implemented, and data transmission load can be increased, so that data transmission between AI processing chips is more efficient.

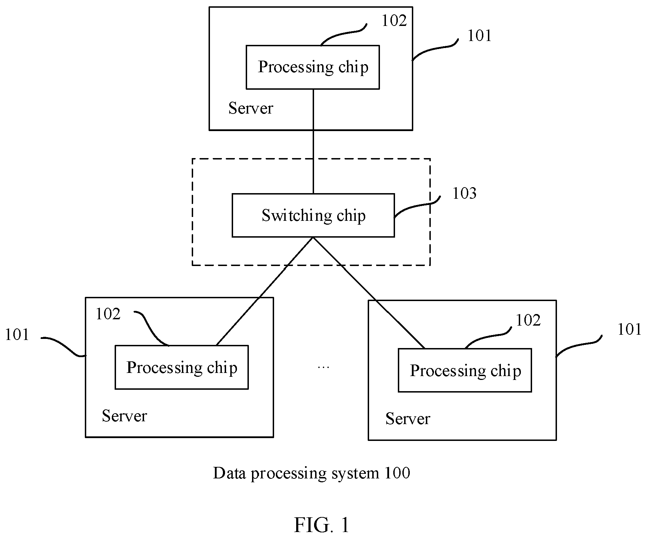

FIG. 1 is a diagram of an implementation environment according to an embodiment of this application. As shown in FIG. 1, the implementation environment includes a data processing system 100. The data processing system 100 includes a plurality of servers 101, a plurality of processing chips 102 are distributed on the plurality of servers 101, and the processing chips 102 are interconnected. In some embodiments, the plurality of servers 101 may access a wireless network or a wired network. This is not limited in this application.

For any server 101, the server 101 includes at least one processing chip 102. The server 101 may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), big data, and an artificial intelligence platform. This is not limited in this application.

For any processing chip 102, the processing chip 102 has a storage capability and a computing capability. The processing chip 102 is, for example, an acceleration chip (refer to the foregoing description, and details are not described herein again) or a general-purpose CPU. This application is not limited thereto. In some embodiments, the processing chips 102 are interconnected through a chip bus. The chip bus is configured to transmit data and various types of requests (for example, an address access request) to each processing chip 102. The chip bus is, for example, an NvLink, a CXL, a UCIe, an HCCS, or a CCIX. This application is not limited thereto.

In this embodiment of this application, each processing chip 102 has a plurality of communication queues, and the plurality of communication queues on each processing chip 102 are configured to store a communication message received by the corresponding processing chip 102. In other words, for any processing chip, the processing chip may determine, by operating the plurality of communication queues on the processing chip 102, whether to perform data transmission with another processing chip. This process is described in detail in the subsequent method embodiments, and details are not described herein again.

In some embodiments, the data processing system 100 further includes a switching chip 103, and the processing chips 102 are interconnected through the switching chip 103. The switching chip 103 is configured to connect different processing chips 102, that is, establish a data transmission path between different processing chips 102, and provide a routing function for data transmission between different processing chips 102. The switching chip 103 is, for example, any chip having a data switching capability. This is not limited in this application. It should be understood that the switching chip 103 is an optional device, and the processing chips 102 may also be directly interconnected.

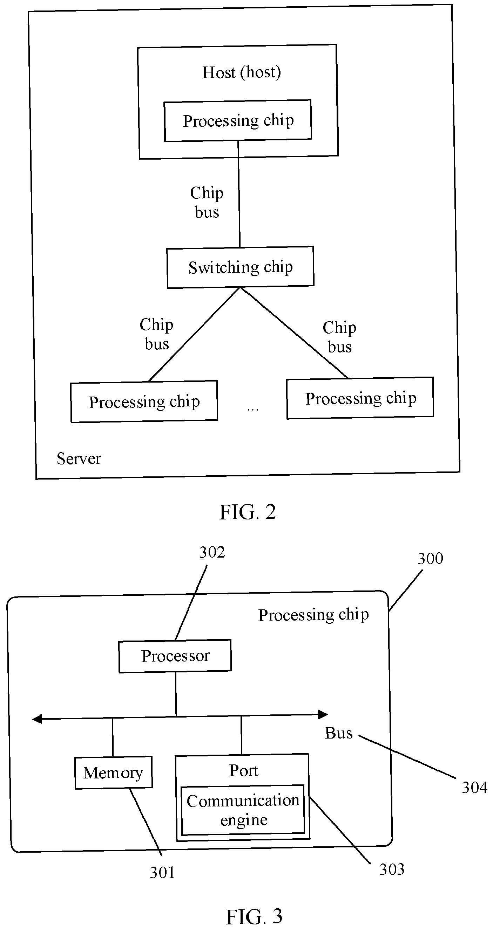

In some embodiments, for any server 101, the server 101 includes a plurality of processing chips 102, and the plurality of processing chips 102 include a processing chip of a host and at least one processing chip connected to the host. The host is a device configured to run various computing services, and can control the at least one processing chip communicatively connected to the host to perform a corresponding computing task. For example, in an AI scenario, the host is connected to a plurality of AI processing chips, and an AI model runs on the host. The host can control the plurality of AI processing chips to perform distributed parallel training on the AI model. In other words, a distributed parallel training task for the AI model is loaded to each AI processing chip for running. For example, FIG. 2 is a diagram of another implementation environment according to an embodiment of this application. As shown in FIG. 2, in the implementation environment, a server includes a processing chip of a host (host) and at least one processing chip connected to the host, and the processing chips are interconnected with a switching chip through a chip bus. It should be understood that FIG. 2 is merely an example for description. Alternatively, the processing chips may be directly interconnected through the chip bus. This is not limited in this application.

It should be noted that quantities of servers 101, processing chips 102, and switching chips 103 shown in FIG. 1 and FIG. 2 are merely examples. There may be more or fewer servers 101, processing chips 102, and switching chips 103. This is not limited in this embodiment of this application.

In some embodiments, the foregoing wireless network or wired network uses a standard communication technology and/or protocol. The network is usually a transmission control protocol/internet protocol (transmission control protocol/internet protocol, TCP/IP) network and an RDMA network in a data center network, for example, an RDMA over converged Ethernet (RDMA over converged Ethernet, RoCE) network and an InfiniBand (InfiniBand, IB) network. This is not limited. In some other embodiments, customized and/or dedicated data communication technologies can alternatively be used to replace or supplement the foregoing data communication technology.

**The following describes a hardware structure of the processing chip in the foregoing data processing system.**

FIG. 3 is a diagram of a structure of a processing chip according to an embodiment of this application. As shown in FIG. 3, a processing chip 300 includes a memory 301, a processor 302, a port 303, and a bus 304. The memory 301, the processor 302, and the port 303 are communicatively connected to each other through the bus 304.

The memory 301 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. For example, the memory 301 is configured to store at least one segment of program code. When the program code stored in the memory 301 is executed by the processor 302, the processing chip 300 is enabled to perform steps related to the processing chip in the following method embodiments.

The processor 302 may be a network processor (network processor, NP), a central processing unit (central processing unit, CPU), an application-specific integrated circuit (application-specific integrated circuit, ASIC), or an integrated circuit configured to control program execution of the solutions of this application. The processor 302 may be a single-core (single-CPU) processor, or may be a multi-core (multi-CPU) processor. There may be one or more processors 302. For example, the processor 302 may include one processing unit, or may include a plurality of processing units. Each processing unit may include a die (die), and different processing units may be interconnected through a bus. The processor 302 may be implemented as one or more microprocessors, microcomputers, microcontrollers, digital signal processors, central processing units, state machines, logic circuits, and/or any devices that process signals based on operation instructions. In addition to other functions, the processor 302 is configured to obtain and execute computer-readable instructions and data stored in the memory.

The port 303 uses a transceiver module such as a transceiver to implement communication between the processing chip 300 and another processing chip or a communication network. For example, data may be obtained through the port 303. In this embodiment of this application, a communication engine is disposed on the port 303, and the communication engine is configured to operate the plurality of communication queues on the processing chip 300. Because the communication engine is a component that first receives an external message by the processing chip 300, operation efficiency can be improved.

The memory 301 and the processor 302 may be disposed separately, or may be integrated together.

The bus 304 may include a path for transmitting information between components (for example, the memory 301, the processor 302, and the port 303) of the processing chip 300.

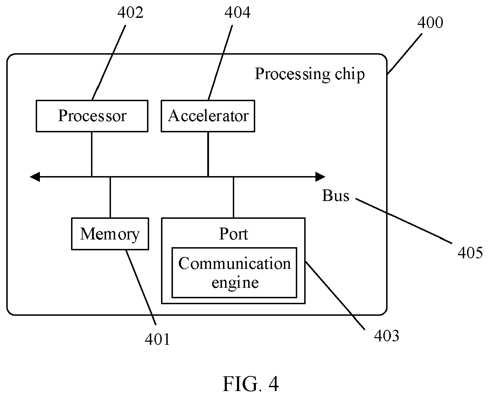

FIG. 4 is a diagram of a structure of another processing chip according to an embodiment of this application. As shown in FIG. 4, a processing chip 400 includes a memory 401, a processor 402, a port 403, an accelerator 404, and a bus 405. The memory 401, the processor 402, the port 403, and the accelerator 404 are communicatively connected to each other through the bus 405. In some embodiments, the processing chip 400 is also referred to as an acceleration chip or an AI processing chip.

The memory 401 may be a ROM or another type of static storage device that can store static information and an instruction, or a RAM or another type of dynamic storage device that can store information and an instruction, or may be an EEPROM, a CD-ROM or another compact disc storage medium, an optical disc storage medium (including a compressed optical disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer, but is not limited thereto. For example, the memory 401 is configured to store at least one segment of program code. When the program code stored in the memory 401 is executed by the processor 402, the processing chip 400 is enabled to perform steps related to the processing chip in the following method embodiments.

The processor 402 may be an NP, a CPU, an ASIC, or an integrated circuit configured to control program execution of the solutions of this application. The processor 402 may be a single-core (single-CPU) processor, or may be a multi-core (multi-CPU) processor. There may be one or more processors 402.

The port 403 uses a transceiver module such as a transceiver to implement communication between the processing chip 400 and another processing chip or a communication network. For example, data may be obtained through the port 403. In some embodiments, a communication engine is disposed on the port 403, and the communication engine is configured to operate the plurality of communication queues on the processing chip 400. In some embodiments, the communication engine may alternatively be disposed separately from the port 403. This is not limited in this application.

The accelerator 404 may be a GPU, an XPU, an IPU, a TPU, a DSA chip, or the like. For example, the accelerator 404 is configured to provide computing power for a computing task running on the processing chip 400, to accelerate a computing process. In addition, there may be one or more accelerators 404. This is not limited in this application.

The memory 401, the processor 402, and the accelerator 404 may be disposed separately, or may be integrated together.

The bus 405 may include a path for transmitting information between components (for example, the memory 401, the processor 402, the port 403, and the accelerator 404) of the processing chip 400.

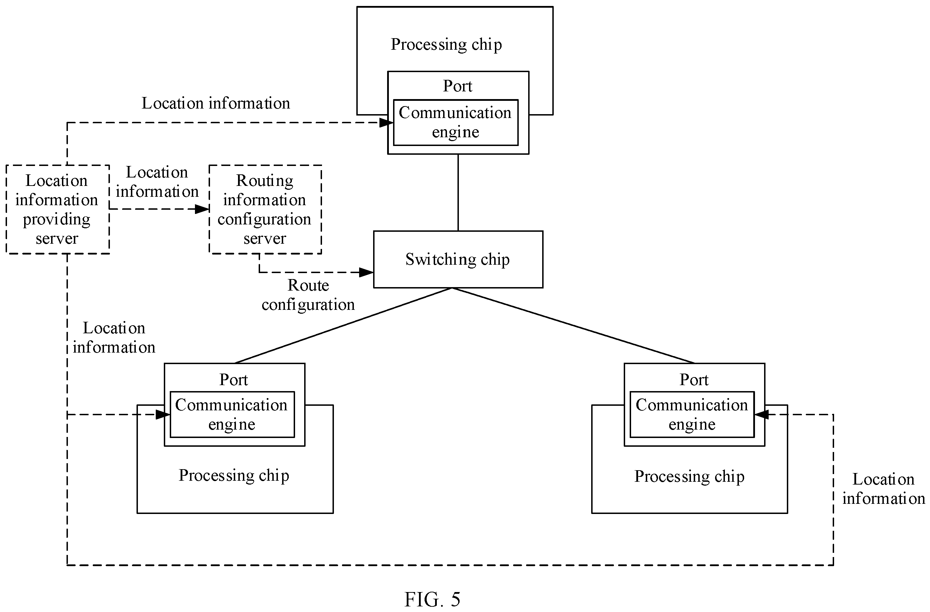

Based on the implementation environments shown in FIG. 1 to FIG. 4, further, in this application, a communication mechanism between a plurality of processing chips is established by using a communication engine on each processing chip in the data processing system, so that data transmission can be implemented between any processing chips, thereby improving data transmission efficiency. With reference to FIG. 5, the following further describes the data processing system provided in this application with reference to the foregoing implementation environment.

FIG. 5 is a diagram of a data processing system according to an embodiment of this application. As shown in FIG. 5, the data processing system includes a plurality of processing chips. The processing chips are interconnected through a switching chip (the figure is merely an example for description, and the processing chips may alternatively not be interconnected by using a switching chip). Each processing chip has a plurality of communication queues, and a port of each processing chip has a communication engine. The communication engine is configured to operate the plurality of communication queues on the processing chip. It should be understood that no server is marked in the figure, but the plurality of processing chips shown in the figure may be deployed in a same server, or may be respectively deployed in different servers. This is not limited in this application.

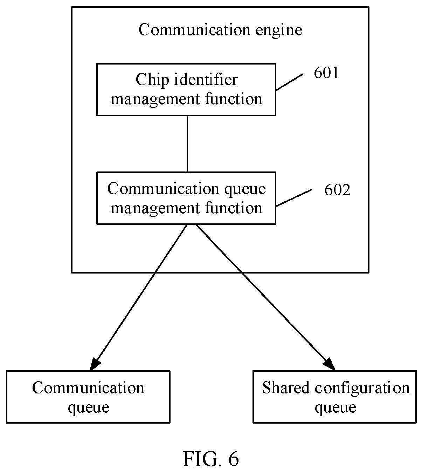

For any processing chip, for functions of the communication engine of the processing chip, refer to FIG. 6. FIG. 6 is a diagram of a structure of a communication engine according to an embodiment of this application. As shown in FIG. 6, functions of the communication engine include but are not limited to a chip identifier management function 601 and a communication queue management function 602.

The chip identifier management function 601 is configured to obtain location information of a processing chip, and generate a chip identifier (or a chip ID for short) of the processing chip based on the location information of the processing chip. It should be understood that the chip identifier of the processing chip is used to identify the processing chip in a data processing system, so that another processing chip can perform data transmission with the processing chip based on the chip identifier of the processing chip. The location information indicates a physical deployment location of the processing chip in the system. For example, the location information of the processing chip includes at least one of the following: a cabinet ID, a subrack ID, a slot ID, and a module ID. This application is not limited thereto. For example, the location information includes a cabinet ID=A, a subrack ID=B, a slot ID=C, and a module ID=D. A manner in which the communication engine generates the chip ID by using the chip identifier management function 601 is, for example, chip ID=A×m+B×n+C×o+D, where m is a maximum quantity of cabinets planned by the data processing system, n is a maximum quantity of subracks planned in one cabinet, and o is a maximum quantity of slots planned in one subrack. For example, if m=2, n=2, and o=2, for a processing chip whose location information includes a cabinet ID=0, a subrack ID=1, a slot ID=2, and a module ID=3, a chip ID of the processing chip is 0×2+1×2+2×2+3=9. In addition, the description of the manner of generating the chip identifier herein is merely an example, and does not constitute a limitation on this application. In actual application, the chip identifier may alternatively be generated in another manner.

The communication queue management function 602 is configured to initialize a plurality of communication queues, manage the plurality of communication queues, and operate the plurality of communication queues, to implement data transmission between the processing chip and another processing chip. In some embodiments, when the plurality of processing chips in the data processing system provide shared memory space, the communication queue management function 602 is further configured to initialize a shared configuration queue of the processing chip, where the shared configuration queue is used to store a mapping relationship between the shared memory space of the processing chip and a chip memory address. It should be understood that, in this case, processing chips in the data processing system may access shared memory space with each other. An AI scenario is used as an example. The shared memory space is, for example, memory space in which the AI processing chip or the CPU chip participates in AI computing. This part of memory space stores parameters, sample data, and the like that need to be processed by the AI processing chip in an AI computing process. In some embodiments, the shared memory space of the plurality of processing chips in the data processing system may be addressed in a unified addressing manner, so that data transmission is performed between the processing chips based on an address access request.

In addition, functions of the communication engine are not limited to the chip identifier management function 601 and the communication queue management function 602. In actual application, more functions may be set according to a user requirement. This is not limited in this application.

In some embodiments, still refer to FIG. 5. The data processing system further includes a location information providing server and a routing information configuration server. The following separately describes functions of the two servers.

The location information providing server is configured to provide location information for each processing chip in the data processing system, that is, send the location information to a communication engine of each processing chip. A sending manner may be a low-speed bus such as an inter-integrated circuit (inter-integrated circuit I2C) or a system management bus (system management bus, SMBUS). This application is not limited thereto. When obtaining the location information, the communication engine of each processing chip may generate a chip identifier of the processing chip based on the location information. For example, for any processing chip, the location information of the processing chip includes at least one of the following: a cabinet ID, a subrack ID, a slot ID, and a module ID. For example, the location information providing server obtains the IDs of the cabinet, subrack, and slot by reading the hardware memory stored in a cabinet, a subrack, and a slot, and then sends the IDs to the communication engine of the processing chip. The communication engine reads a register of the processing chip by using the chip identifier management function to obtain the module ID, and then generates the chip identifier. Certainly, related personnel may directly number each processing chip in the data processing system in a unified manner based on a deployment location of the processing chip, and allocate the cabinet ID, the subrack ID, the slot ID, and the module ID, and then send the cabinet ID, the subrack ID, the slot ID, and the module ID to the communication engine by using the location information providing server. A manner in which each processing chip obtains location information is not limited in this application.

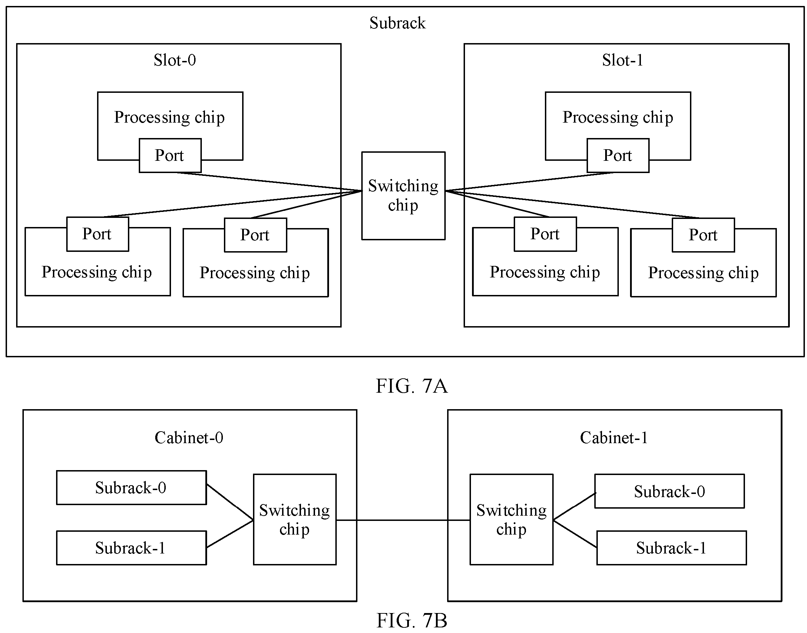

In addition, because forms of different servers are usually different, identifiers of location information of processing chips are also different. A data processing system formed by servers with form differences is also referred to as a heterogeneous system (that is, a complete system formed by processing units or subsystems of different architectures). For example, in a cabinet server, a server cabinet is divided into subracks, and a subrack is further divided into modules. In addition to the cabinet server, there is also a rack server, and one rack server includes a plurality of rack-mounted servers. In addition, there are tower servers, blade servers, and the like. This application is applicable to various types of servers. The cabinet server is used as an example. One cabinet includes a plurality of subracks, one subrack includes a plurality of slots, each slot includes one server, and one slot includes a plurality of processing chips. When the data processing system includes a switching chip, the switching chip is usually responsible for data exchange between a plurality of processing chips in one slot, and is also responsible for data exchange between slots and between subracks. Certainly, there may be more or fewer switching chips. For example, when one data processing system includes a plurality of cabinets, a quantity of switching chips increases. In addition to being responsible for data exchange between processing chips at a location to which each switching chip belongs, each switching chip is also responsible for data exchange between processing chips at different locations. For example, FIG. 7A and FIG. 7B are a diagram of a data processing system according to an embodiment of this application. As shown in FIG. 7A, two slots in a subrack are interconnected through a switching chip, and each subrack has an independent switching chip. As shown in FIG. 7B, two cabinets are interconnected through a switching chip, and each cabinet has an independent bus switching chip. It should be understood that FIG. 7A and FIG. 7B are merely an example for description, and does not constitute a limitation on the networking architecture between the processing chips in this application.

The routing information configuration server is configured to provide routing information for the switching chip when the data processing system includes the switching chip, where the routing information indicates a data transmission path between different processing chips. For example, when a unified addressing manner is used for shared memory space of each processing chip, the shared memory space of each processing chip is different, and a range of the shared memory space is associated with a location of the processing chip. An address access request sent to a processing chip or an address access request sent from a processing chip is routed through a switching chip to access an address. Generally, each subrack and cabinet have an independent switching chip. When routing an address access request entering the cabinet or subrack, the switching chip configures corresponding routing information based on a range of shared memory space of the processing chip in a region to which the switching chip belongs, so that the address access request is sent to a processing chip in a specified cabinet, subrack, or slot based on the routing information.

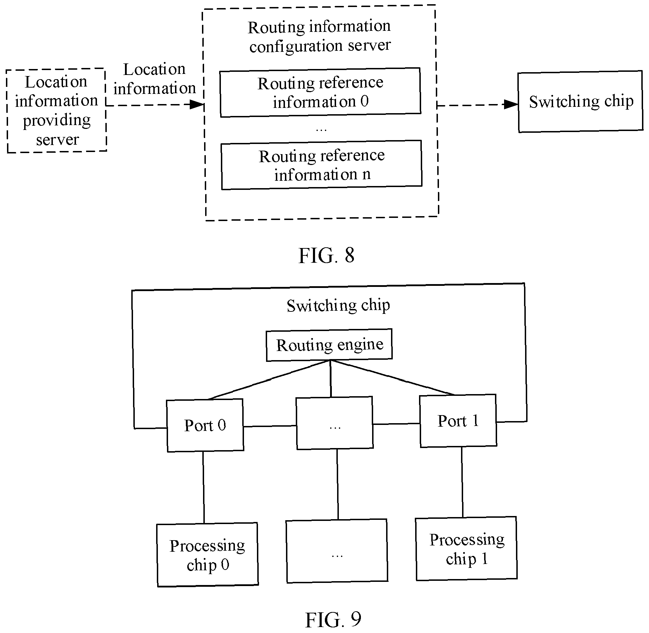

For example, FIG. 8 is a diagram of a routing information configuration process according to an embodiment of this application. As shown in FIG. 8, the location information providing server sends location information of each processing chip and location information of the switching chip to the routing information configuration server. The routing information configuration server generates routing reference information (for example, routing reference information 0 to n, where n is a positive integer) of the switching chip based on the location information of each processing chip and the location information of the switching chip, and then configures the routing reference information to the switching chip. The switching chip configures corresponding routing information based on the routing reference information. The routing reference information is, for example, a range of the shared memory space of each processing chip, and the routing information indicates a data transmission path between different processing chips. In some embodiments, the data transmission path in the routing information is associated with a chip identifier of the processing chip. It should be understood that, after the switching chip configures the routing information, the switching chip in the data processing system is capable of enabling an accelerator, a CPU core, and the like between processing chips to directly use an address for access in a unified addressing manner. FIG. 9 is a diagram of a switching chip according to an embodiment of this application. As shown in FIG. 9, a plurality of ports of the switching chip are interconnected with a plurality of processing chips, and routing information is configured on a routing engine of the switching chip, so that a data transmission path between any two processing chips connected to the switching chip can be indicated. For example, a processing chip 0 is interconnected with a port 0 of the switching chip, and a processing chip 1 is interconnected with a port 1 of the switching chip. If the switching chip receives an address access request from the processing chip 1, and the address access request indicates that data is transmitted with the processing chip 1, the switching chip routes the address access request to the processing chip 1 connected to the port 1 based on the routing information. In other words, data in a specified address space on one processing chip is transmitted to a specified address space on another processing chip.

It should be noted that both a location information providing server and a routing information configuration server are optional devices. For example, the location information and the routing information may be directly configured for each processing chip and switching chip by related personnel. In addition, functions provided by the location information providing server and the routing information configuration server may be implemented by using one physical device, or may be implemented by using different physical devices. This application is not limited thereto.

Based on the data processing system described in FIG. 1 to FIG. 9, the following describes a data transmission method provided in this application.

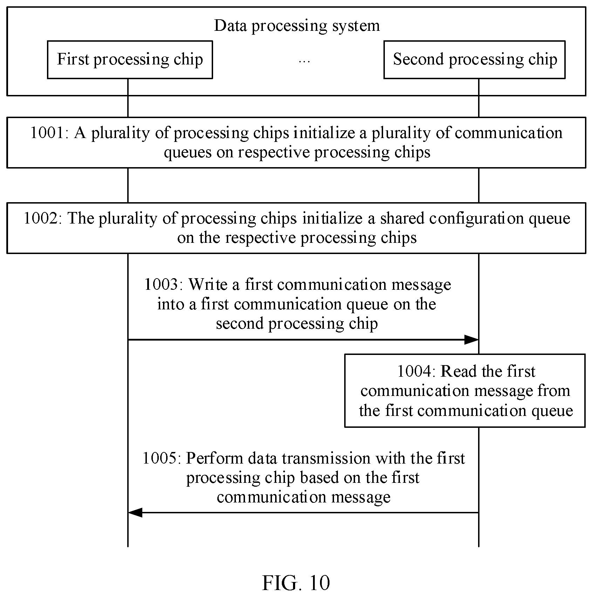

FIG. 10 is a diagram of a data transmission method according to an embodiment of this application. As shown in FIG. 10, interaction between any two processing chips in a data processing system is used as an example for description. For example, the data transmission method includes the following step 1001 to step 1005.

**1001: A plurality of processing chips initialize a plurality of communication queues on respective processing chips, where the plurality of communication queues are used to store communication messages received by the processing chips.**

In this embodiment of this application, for any processing chip, a communication engine is deployed on a port of the processing chip, and the processing chip initializes the plurality of communication queues by using a communication engine.

For example, for any processing chip, the communication engine of the processing chip initializes the plurality of communication queues based on a quantity of processing chips in the data processing system. In some embodiments, the quantity of the plurality of processing chips is equal to a quantity of the plurality of communication queues. For example, if the data processing system includes 256 processing chips, the communication engine initializes 256 communication queues, and the 256 communication queues are in a one-to-one correspondence with the 256 processing chips, or one communication queue belongs to one processing chip. It should be understood that this is merely an example for description. In some embodiments, a quantity of the plurality of communication queues may also be greater than a quantity of the plurality of processing chips. For example, if the data processing system includes 256 processing chips, the communication engine initializes 300 communication queues, and the first 256 communication queues are in a one-to-one correspondence with the 256 processing chips. In this manner, when a processing chip is subsequently added to the data processing system, a communication queue that is not associated with a processing chip may be associated with the newly added processing chip, thereby improving processing efficiency.

In some embodiments, for any processing chip, each communication queue on the processing chip is associated with a chip identifier of each processing chip in the data processing system. For example, the chip identifier of the processing chip is determined based on a physical deployment location of the processing chip in the data processing system, that is, determined based on location information of the processing chip. For the location information of the processing chip, refer to related content in FIG. 5. Details are not described herein again.

In some embodiments, for any processing chip, the plurality of communication queues on the processing chip are stored in shared memory space of the processing chip. The shared memory space may be located in a storage unit of a port on the processing chip, or may be located in a memory of the processing chip. This is not limited in this application. It should be understood that the shared memory space used to store the plurality of communication queues may be accessed by all the plurality of processing chips in the data processing system. For example, a depth of each communication queue is a default value 2 KB. Certainly, the depth may alternatively be configured as another value when the plurality of communication queues are initialized. This is not limited in this application.

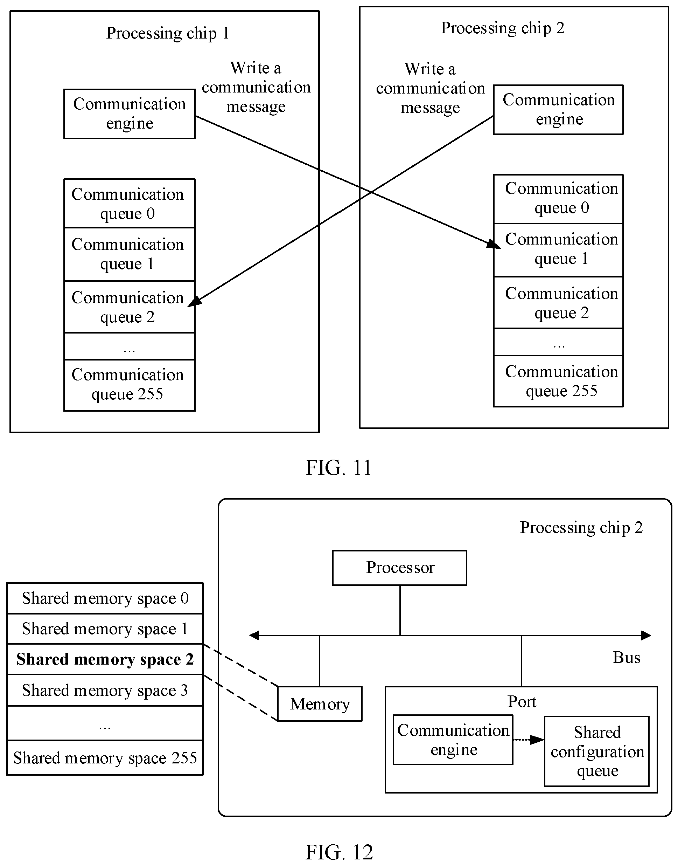

For example, FIG. 11 is a diagram of a communication queue according to an embodiment of this application. As shown in FIG. 11, for example, the data processing system includes 256 processing chips, each processing chip has 256 communication queues, and each communication queue is in a one-to-one correspondence with each processing chip. A depth of each communication queue is a default value 2 KB, and shared memory space occupied by the 256 communication queues is 512 KB. Any two processing chips shown in FIG. 11 are used as an example. After the plurality of communication queues are initialized, if a processing chip 1 requests to perform data transmission with a processing chip 2, the processing chip 1 writes a communication message into a communication queue 1 corresponding to the processing chip 1 on the processing chip 2. In this way, when reading the communication message from the communication queue 1, the processing chip 2 may perform data transmission with the processing chip 1 based on the communication message. In other words, when a processing chip in the data processing system requests to perform data transmission with another processing chip, a communication message may be written into a communication queue that belongs to the processing chip and that is on the another processing chip. When a processing chip receives a communication message from another processing chip, the processing chip reads a corresponding communication message from a communication queue that belongs to the another processing chip and that is on the processing chip.

After step 1001, each processing chip in the data processing system initializes a plurality of communication queues on the respective processing chip. Because the plurality of communication queues are used to store communication messages from the another processing chip, the plurality of communication queues provide technical support for point-to-point communication between the processing chips.

**1002: The plurality of processing chips initialize a shared configuration queue on the respective processing chips, where the shared configuration queue is used to store a mapping relationship between shared memory space of the processing chip and a chip memory address of the processing chip.**

In this embodiment of this application, for any processing chip, a communication engine is deployed on a port of the processing chip. When the plurality of processing chips in a data processing system provide the shared memory space, the processing chip initializes the shared configuration queue of the processing chip by using the communication engine.

For example, for any processing chip, the communication engine of the processing chip initializes the shared configuration queue based on the shared memory space corresponding to the processing chip in the data processing system. In some embodiments, the shared memory space of the plurality of processing chips in the data processing system is evenly allocated based on target shared memory space of the data processing system. For example, the target shared memory space of the data processing system is 128 TB, and the 256 processing chips are supported to be interconnected in a unified addressing manner. The target shared memory space is equally divided based on 256, and shared memory space that can be accessed by each processing chip from another processing chip is 512 GB. Based on this, the communication engine of the processing chip establishes, based on an address translation unit (address translation unit, ATU), a mapping relationship between the shared memory space of the processing chip and the chip memory address of the processing chip, and stores the mapping relationship in the shared configuration queue.

In some embodiments, for any processing chip, the shared configuration queue on the processing chip is associated with a chip identifier of the processing chip. For example, the chip identifier of the processing chip is determined based on a physical deployment location of the processing chip in the data processing system, that is, determined based on location information of the processing chip. For the location information of the processing chip, refer to related content in FIG. 5. Details are not described herein again.

In some embodiments, for any processing chip, the shared configuration queue on the processing chip is stored in the shared memory space of the processing chip. The shared memory space may be located in a storage unit of a port on the processing chip, or may be located in a memory of the processing chip. This is not limited in this application.

For example, FIG. 12 is a diagram of a shared configuration queue according to an embodiment of this application. As shown in FIG. 12, for example, a data processing system includes 256 processing chips, and each processing chip has a shared configuration queue corresponding to the processing chip. A processing chip 2 shown in FIG. 12 is used as an example. A communication engine of the processing chip 2 establishes, based on an ATU, a mapping relationship between shared memory space of the processing chip 2 and a chip memory address of the processing chip 2, and stores the mapping relationship in the shared configuration queue. In this manner, when another processing chip requests to access the chip memory address of the processing chip 2, the access may be implemented by accessing shared memory space 2 of the processing chip 2, thereby improving data transmission efficiency.

After step 1002, each processing chip in the data processing system initializes the shared configuration queue on the respective processing chip. Because the shared configuration queue is used to store a mapping relationship between the shared memory space of the processing chip and the chip memory address of the processing chip, the shared configuration queue provides technical support for data transmission between the processing chips based on an address access request.

With reference to step 1003 to step 1005, the following describes a process of performing data transmission between any two processing chips (a first processing chip and a second processing chip) by using interaction between the any two processing chips as an example. The first processing chip and the second processing chip are deployed in a same server, or the first processing chip and the second processing chip are respectively deployed in different servers. This is not limited in this application.

**1003: The first processing chip writes a first communication message into a first communication queue on the second processing chip, where the first communication message carries a chip memory address of to-be-transmitted data between the first processing chip and the second processing chip, and the first communication queue is used to store a communication message of the first processing chip.**

In this embodiment of this application, there are a plurality of communication queues on the second processing chip, and the first communication queue is used to store the communication message of the first processing chip. In some embodiments, the first processing chip writes the first communication message into the first communication queue associated with a first chip identifier, where the first chip identifier is used to identify the first processing chip.

Cases in which the first communication message carries a chip memory address of the to-be-transmitted data between the first processing chip and the second processing chip include the following: In a first case, if the first processing chip requests to send data on the first processing chip to the second processing chip (or data on the first processing chip needs to be obtained by the second processing chip), the chip memory address is a chip memory address on the first processing chip. In other words, the to-be-transmitted data is data to be transmitted from the first processing chip to the second processing chip. In a second case, if the first processing chip requests to read data from the second processing chip, the chip memory address is a chip memory address on the second processing chip. In other words, the to-be-transmitted data is data to be transmitted from the second processing chip to the first processing chip. In other words, a data transmission manner indicated by the communication message is not limited in this application. The data transmission manner may be that the source processing chip sends data to a destination processing chip, or may be that the source processing chip obtains data from the destination processing chip.

In some embodiments, before the first processing chip writes the first communication message into the first communication queue on the second processing chip, the first processing chip writes a status message into the first communication queue on the second processing chip, where the status message indicates a chip status of the first processing chip. The chip status refers to an operating status of the processing chip. For example, the operating status is available or unavailable (for example, the processing chip cannot operate normally due to an exception, restart, or power-off). For example, the communication engine of the first processing chip writes the status message into the first communication queue. In some embodiments, the first processing chip writes the status message into the head of the first communication queue. This is not limited in this application. In addition, when initializing the plurality of communication queues, the first processing chip may write a first status message into the first communication queue on the second processing chip, where the first status message indicates that a chip status of the first processing chip is available (for example, marked as active). When the first processing chip encounters an exception, restarts, or is powered off, a second status message is written into the first communication queue on the second processing chip, where the second status message indicates that the chip status of the first processing chip is unavailable (for example, marked as inactive). In some embodiments, the status message may further carry other content, for example, an available time period of the processing chip and a reason for unavailability. This is not limited in this application.

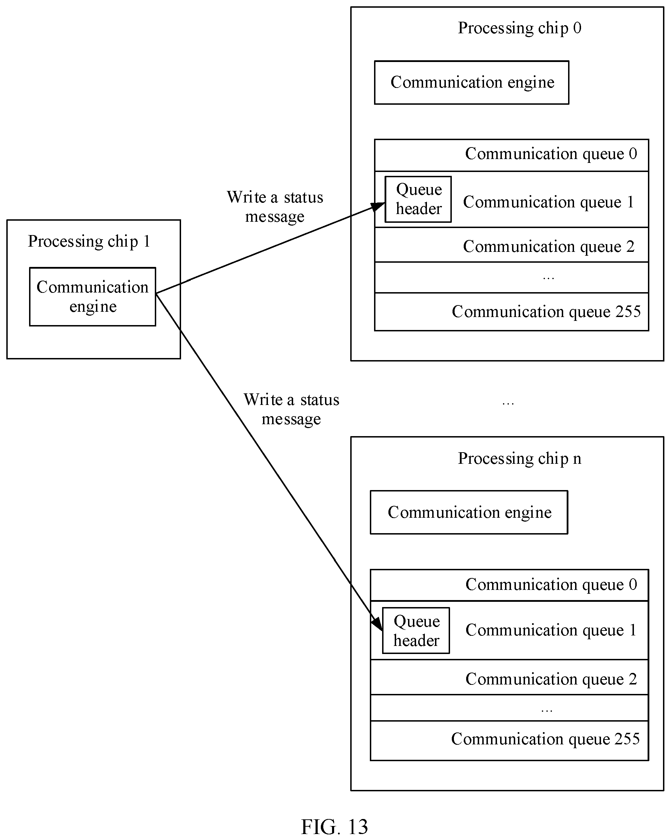

In addition, the foregoing is described by using an example in which the first processing chip writes the status message into the first communication queue on the second processing chip. In some examples, the first processing chip may write the status message into the first communication queue on all processing chips in the data processing system, or may write the status message into the first communication queue on another processing chip in the system other than the first processing chip. For example, FIG. 13 is a diagram of writing a status message into a communication queue according to an embodiment of this application. As shown in FIG. 13, the first processing chip (for example, the processing chip 1) writes the status message into the first communication queue on another processing chip in the system other than the first processing chip, for example, writes the status message into the head of the first communication queue. It should be understood that the first processing chip may update the status message in the first communication queue on the another processing chip in time based on the chip status of the first processing chip, so that the another processing chip learns the chip status of the first processing chip in time. It should be noted that any processing chip in the data processing system may implement functions of the first processing chip. Details are not described herein again.

**1004: The second processing chip reads the first communication message from the first communication queue.**

In this embodiment of this application, after the first processing chip writes the first communication message into the first communication queue on the second processing chip, the second processing chip may read the first communication message by using an interrupt mechanism and/or a polling mechanism. This is not limited in this application. In other words, the communication mechanism provided in this application supports a plurality of message reading manners, and can be flexibly used according to an actual requirement.

The interrupt mechanism is used as an example. After writing the first communication message into the first communication queue on the second processing chip, the first processing chip sends an interrupt message to the second processing chip. The second processing chip receives the interrupt message, and reads the first communication message from the first communication queue. The processing chip can learn the communication message in time by using the interrupt mechanism, thereby saving time consumed for data transmission.

The polling mechanism is used as an example. The second processing chip reads the plurality of communication queues on the second processing chip in a polling manner. If the second processing chip reads that the first communication queue stores the communication message, the second processing chip reads the first communication message from the first communication queue. For example, the communication engine of the second processing chip reads the first communication message from the first communication queue. Communication resources between different processing chips can be saved by using a polling mechanism.

**1005: The second processing chip performs data transmission with the first processing chip based on the first communication message.**

In this embodiment of this application, because the first communication message carries a chip memory address of to-be-transmitted data, the second processing chip can perform data transmission with the first processing chip based on the chip memory address carried in the first communication message. In some embodiments, when the plurality of processing chips in the data processing system provide the shared memory space, this step includes the following several cases.

In a first case, the to-be-transmitted data refers to data to be transmitted from the first processing chip to the second processing chip. For example, the second processing chip sends a data obtaining request to the first processing chip based on the first communication message; the first processing chip determines, based on the data obtaining request and a shared configuration queue on the first processing chip, shared memory space corresponding to the to-be-transmitted data, and transmits the to-be-transmitted data to the second processing chip based on the shared memory space corresponding to the to-be-transmitted data.

In a second case, the to-be-transmitted data refers to data to be transmitted from the second processing chip to the first processing chip. For example, the second processing chip determines, based on the first communication message and a shared configuration queue on the second processing chip, shared memory space corresponding to the to-be-transmitted data, and transmits the to-be-transmitted data to the first processing chip based on the shared memory space corresponding to the to-be-transmitted data.

In the foregoing manner, implementation manners of implementing data transmission based on a shared configuration queue are separately described for several different cases of the to-be-transmitted data. In this way, when the plurality of processing chips in the data processing system provide the shared memory space, a flexible communication mechanism described above can also be configured, thereby implementing efficient data transmission between any two processing chips.

In some embodiments, if the first processing chip and the second processing chip are interconnected through the chip bus, the second processing chip sends an address access request to the first processing chip based on the first communication message through the chip bus, where the address access request indicates that data transmission is performed with the first processing chip. It can be learned from the foregoing description that the chip bus is, for example, an NvLink, a CXL, a UCIe, an HCCS, or a CCIX. Because the chip bus can directly transmit a memory access request sent by an acceleration unit in an acceleration chip or a CPU core in a general-purpose CPU, a memory access request passing through a bus does not need to be converted into a request in another format or encapsulated into a request in another format. Therefore, in this manner, data transmission efficiency between different processing chips can be effectively improved.

In some embodiments, if the first processing chip and the second processing chip are interconnected through the chip bus and the switching chip, the second processing chip sends an address access request to the first processing chip based on the first communication message through the chip bus and the switching chip, where the address access request indicates that data transmission is performed with the first processing chip. The switching chip has routing information, and the routing information indicates a data transmission path between the first processing chip and the second processing chip. For the routing information, refer to the foregoing description. Details are not described herein again.

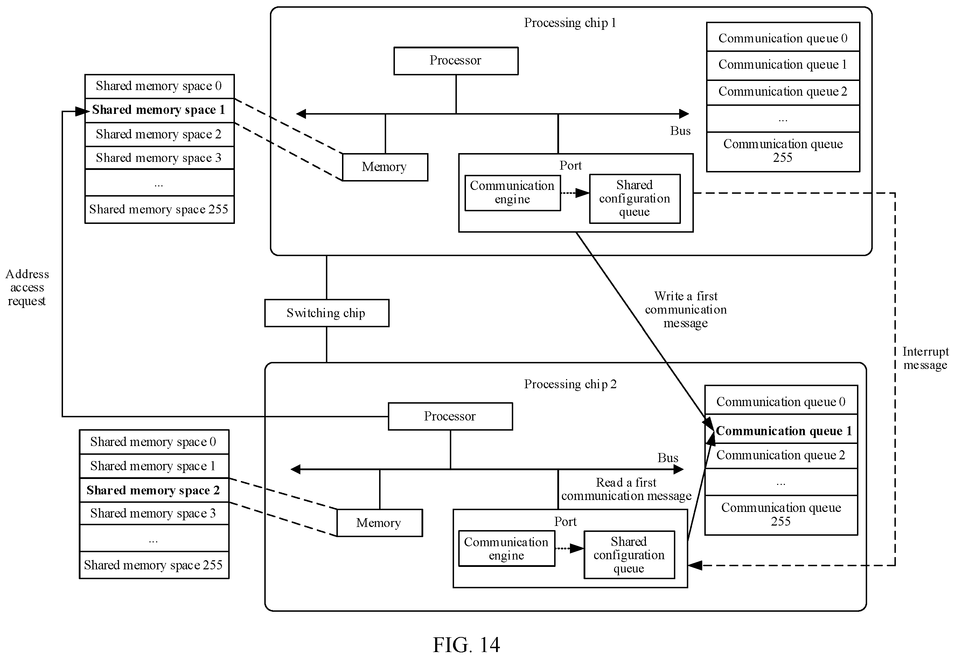

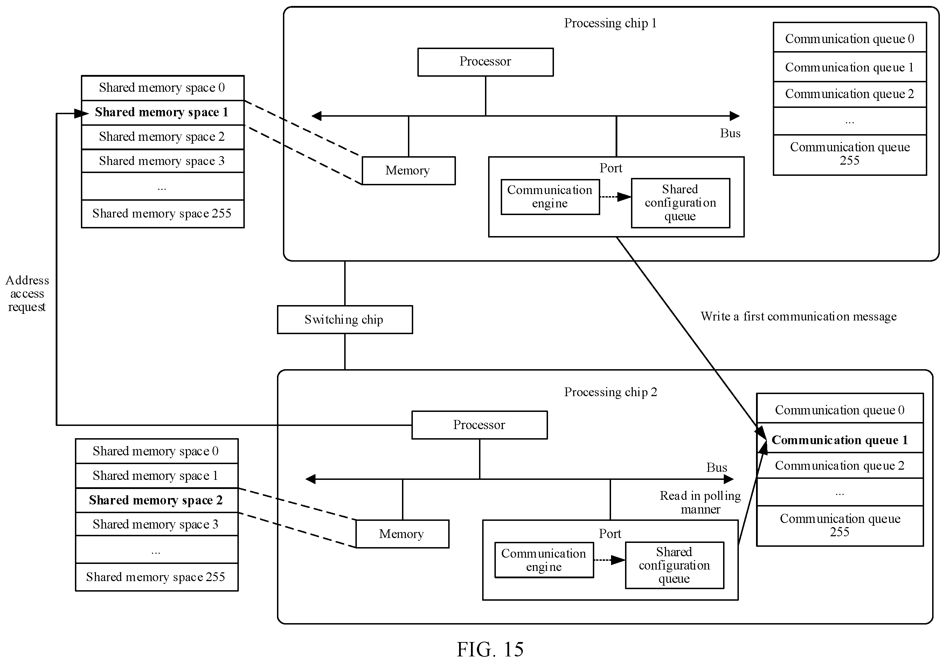

With reference to FIG. 14 and FIG. 15, the following describes the data transmission method described in step 1003 to step 1005 by using an example in which the second processing chip reads the first communication message based on the interrupt mechanism or the polling mechanism.

FIG. 14 is a diagram of a process of a data transmission method according to an embodiment of this application. As shown in FIG. 14, an example in which the first processing chip (the processing chip 1) requests to send data on the first processing chip to the second processing chip (the processing chip 2) is used (or in other words, the first processing chip has data that needs to be obtained by the second processing chip). The communication engine of the first processing chip writes a first communication message to a first communication queue (a communication queue 1) on the second processing chip. The first communication message carries a chip memory address of to-be-transmitted data on the first processing chip, for example, a PA0 address. The communication engine of the first processing chip sends an interrupt message to the second processing chip. The communication engine of the second processing chip receives the interrupt message, reads the first communication message from the first communication queue, obtains the chip memory address of the to-be-transmitted data from the first communication message, and sends the chip memory address to a processor on the second processing chip. The processor sends the address access request to the first processing chip based on the chip memory address of the to-be-transmitted data by using the switching chip, that is, accesses shared memory space 1 of the first processing chip, so that the first processing chip determines, based on the address access request and the shared configuration queue, the shared memory space corresponding to the to-be-transmitted data, and transmits the to-be-transmitted data to the second processing chip based on the shared memory space corresponding to the to-be-transmitted data. It should be understood that a process in which the first processing chip requests to read data (for example, a PA1 address) from the second processing chip is similar to the foregoing process. Therefore, details are not described again.

FIG. 15 is a schematic flowchart of another data transmission method according to an embodiment of this application. As shown in FIG. 15, an example in which a first processing chip (a processing chip 1) requests to send data on the first processing chip to a second processing chip (a processing chip 2) is used (or in other words, the first processing chip has data that needs to be obtained by the second processing chip). A communication engine of the first processing chip writes a first communication message to a first communication queue (a communication queue 1) on the second processing chip. The first communication message carries a chip memory address of to-be-transmitted data on the first processing chip, for example, a PA0 address. A communication engine of the second processing chip reads, in polling manner, a plurality of communication queues on the second processing chip. If it is read that the first communication queue stores a communication message, the first communication message is read from the first communication queue, and the chip memory address of the to-be-transmitted data is obtained from the first communication message, and the first communication message is sent to the processor on the second processing chip. The processor sends an address access request to the first processing chip based on the chip memory address of the to-be-transmitted data by using the switching chip, that is, accesses shared memory space 1 of the first processing chip, so that the first processing chip determines, based on the address access request and the shared configuration queue, the shared memory space corresponding to the to-be-transmitted data, and transmits the to-be-transmitted data to the second processing chip based on the shared memory space corresponding to the to-be-transmitted data. It should be understood that a process in which the first processing chip requests to read data (for example, a PA1 address) from the second processing chip is similar to the foregoing process. Therefore, details are not described again.

In addition, the foregoing embodiment is described by using an example in which the first processing chip writes the communication message to the second processing chip. Similarly, the first processing chip may also read the communication message from the second processing chip from a local communication queue, and perform data transmission with the second processing chip. Details are not described herein again.

With reference to FIG. 5, the following describes an overall procedure of the data transmission method provided in embodiments of this application by using an example. As shown in FIG. 5, the data processing system includes a plurality of processing chips, and the processing chips are interconnected with a switching chip through a chip bus (or may not be interconnected by using the switching chip). Each processing chip has a communication engine on a port, and the communication engine is configured to operate a plurality of communication queues and a shared configuration queue. It should be understood that no server is marked in the figure, but the plurality of processing chips shown in the figure may be deployed in a same server, or may be respectively deployed in different servers. This is not limited in this application. In some embodiments, the data processing system further includes a location information providing server and a routing information configuration server. The location information providing server is configured to provide location information for each processing chip in the data processing system, and the routing information configuration server is configured to provide routing information for the switching chip. In the data processing system shown in FIG. 5, the communication engine on the processing chip, the location information providing server, and the routing information configuration server cooperate with each other to establish a flexible communication mechanism between any processing chips, so that any processing chips can perform data transmission by using an address access request, thereby improving data transmission efficiency between different processing chips. In addition, this communication mechanism does not require heavy communication status machine management or complex packet encapsulation. Instead, data transmission between different processing chips in the system is implemented by using chip identifiers of the processing chips and communication queues on the processing chips. In this way, fast data access is implemented, and data transmission load is increased, thereby making data transmission between different processing chips more efficient.

In conclusion, the data transmission method provided in this embodiment of this application is applied to a data processing system. A plurality of processing chips are distributed on a plurality of servers in the system. Each processing chip has a plurality of communication queues, used for storing communication messages received by the processing chip. Based on this, when data transmission is performed between any two processing chips, a first processing chip writes a first communication message into a first communication queue corresponding to the first processing chip on a second processing chip, so that the second processing chip performs data transmission with the first processing chip based on the first communication message. According to this flexible communication mechanism, data transmission is quickly implemented between any two processing chips in the system, thereby improving data transmission efficiency between different processing chips. In addition, even if the processing chips are deployed on different servers, data transmission may be performed in this manner, thereby effectively improving data transmission efficiency.

In addition, this application further provides a data transmission apparatus. The apparatus is configured on a processing chip, and can implement the steps performed by the processing chip in the foregoing method embodiments. For example, the apparatus includes at least one functional unit, and the at least one functional unit is configured to implement the steps performed by the processing chip in the foregoing method embodiments. For example, the at least one functional unit includes a communication message writing unit and a data transmission unit. The communication message writing unit is configured to write a communication message to a communication queue on another processing chip, and the data transmission unit is configured to perform data transmission with the another processing chip based on the communication message read from the communication queue. It should be understood that, when the data transmission apparatus performs data transmission, division into the foregoing functional units is merely used as an example for description. In actual application, the foregoing functions may be allocated to different functional units for implementation based on a requirement. In other words, an inner structure of the apparatus is divided into different functional units to implement all or some of the functions described above. In addition, the data transmission apparatus provided in the foregoing embodiment and the data transmission method embodiment belong to a same concept. For a specific implementation process of the apparatus, refer to the method embodiment. Details are not described herein again.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, the first processing chip may be referred to as the second processing chip, and similarly, the second processing chip may be referred to as the first processing chip. Both the first processing chip and the second processing chip may be processing chips, and in some cases, may be separate and different processing chips.

In this application, the term "at least one" means one or more, and the term "a plurality of" means two or more. For example, a plurality of processing chips means two or more processing chips.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, all or a part of embodiments may be implemented in a form of program structure information. The program structure information includes one or more program instructions. When the program instructions are loaded and executed on a computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data transmission method, applied to a data processing system, wherein the data processing system comprises a plurality of servers, a plurality of processing chips are distributed on the plurality of servers, the processing chips are interconnected, each processing chip has a plurality of communication queues, the plurality of communication queues are used to store communication messages received by the processing chips, and the method comprises:
writing, by a first processing chip, a first communication message into a first communication queue on a second processing chip, wherein the first communication message carries a chip memory address of to-be-transmitted data between the first processing chip and the second processing chip, and the first communication queue is used to store a communication message of the first processing chip; and
performing, by the second processing chip, data transmission with the first processing chip based on the first communication message.

2. The method according to claim 1, wherein a communication engine is disposed on a port of each processing chip, and the communication engine is configured to operate the plurality of communication queues on the processing chip.

3. The method according to claim 1 or 2, wherein each processing chip further comprises a shared configuration queue, and the shared configuration queue is used to store a mapping relationship between shared memory space of the processing chip and a chip memory address of the processing chip.

4. The method according to claim 3, wherein if the to-be-transmitted data is data to be transmitted from the first processing chip to the second processing chip, and performing, by the second processing chip, data transmission with the first processing chip based on the first communication message comprises:
sending, by the second processing chip, a data obtaining request to the first processing chip based on the first communication message; and
determining, by the first processing chip based on the data obtaining request and a shared configuration queue on the first processing chip, shared memory space corresponding to the to-be-transmitted data, and transmitting the to-be-transmitted data to the second processing chip based on the shared memory space corresponding to the to-be-transmitted data.

5. The method according to claim 3, wherein if the to-be-transmitted data is data to be transmitted from the second processing chip to the first processing chip, and performing, by the second processing chip, data transmission with the first processing chip based on the first communication message comprises:
determining, by the second processing chip based on the first communication message and a shared configuration queue on the second processing chip, shared memory space corresponding to the to-be-transmitted data, and transmitting the to-be-transmitted data to the first processing chip based on the shared memory space corresponding to the to-be-transmitted data.

6. The method according to any one of claims 1 to 5, wherein writing, by the first processing chip, the first communication message into the first communication queue on the second processing chip comprises:
writing, by the first processing chip, the first communication message into the first communication queue associated with a first chip identifier, wherein the first chip identifier is used to identify the first processing chip.

7. The method according to any one of claims 1 to 6, wherein the method further comprises:
writing, by the first processing chip, a status message into the first communication queue, wherein the status message indicates a chip status of the first processing chip.

8. The method according to claim 7, wherein writing, by the first processing chip, the status message into the first communication queue comprises:
writing, by the first processing chip, the status message into the head of the first communication queue.

9. The method according to any one of claims 1 to 8, wherein the first processing chip and the second processing chip are deployed in a same server, or the first processing chip and the second processing chip are respectively deployed in different servers.

10. The method according to any one of claims 1 to 9, wherein the first processing chip and the second processing chip are interconnected through a switching chip, the switching chip has routing information, and the routing information indicates a data transmission path between the first processing chip and the second processing chip.

11. The method according to any one of claims 1 to 10, wherein the first processing chip and the second processing chip are interconnected through a chip bus, and performing, by the second processing chip, data transmission with the first processing chip based on the first communication message comprises:
sending, by the second processing chip, an address access request to the first processing chip based on the first communication message through the chip bus, wherein the address access request indicates that data transmission is performed with the first processing chip.

12. The method according to any one of claims 1 to 11, wherein the method further comprises:
reading, by the second processing chip, the first communication message by using an interrupt mechanism and/or a polling mechanism.

13. A data transmission system, wherein the data processing system comprises a plurality of servers, a plurality of processing chips are distributed on the plurality of servers, the processing chips are interconnected, each processing chip has a plurality of communication queues, and the plurality of communication queues are used to store communication messages received by the processing chips;
a first processing chip is configured to write a first communication message into a first communication queue on a second processing chip, wherein the first communication message carries a chip memory address of to-be-transmitted data between the first processing chip and the second processing chip, and the first communication queue is used to store a communication message of the first processing chip; and
the second processing chip is configured to perform data transmission with the first processing chip based on the first communication message.

14. The system according to claim 13, wherein a communication engine is disposed on a port of each processing chip, and the communication engine is configured to operate the plurality of communication queues on the processing chip.

15. The system according to claim 13 or 14, wherein each processing chip further comprises a shared configuration queue, and the shared configuration queue is used to store a mapping relationship between shared memory space of the processing chip and a chip memory address of the processing chip.

16. The system according to any one of claims 13 to 15, wherein the first processing chip and the second processing chip are deployed in a same server, or the first processing chip and the second processing chip are respectively deployed in different servers.

17. The system according to any one of claims 13 to 16, wherein the first processing chip and the second processing chip are interconnected through a switching chip, the switching chip is configured with routing information, and the routing information indicates a data transmission path between the first processing chip and the second processing chip.

18. The system according to any one of claims 13 to 17, wherein the first processing chip and the second processing chip are interconnected through a chip bus; and
the second processing chip is configured to send an address access request to the first processing chip based on the first communication message through the chip bus, wherein the address access request indicates that data transmission is performed with the first processing chip.

19. A processing chip, wherein the processing chip comprises a port, the port is configured to interconnect with another processing chip outside the processing chip, and the processing chip is configured to implement functions of the processing chip in the data transmission method according to any one of claims 1 to 12.

20. A server, wherein the server comprises at least one processing chip, and the processing chip is configured to implement functions of the processing chip in the data transmission method according to any one of claims 1 to 12.

21. A computer-readable storage medium, wherein the computer-readable storage medium is configured to store at least one segment of program code, and the at least one segment of program code is used to implement the data transmission method according to any one of claims 1 to 12.

22. A computer program product, wherein when the computer program product runs on a processing chip, the processing chip is enabled to implement functions of the processing chip in the data transmission method according to any one of claims 1 to 12.
